Europäisches Patentamt

(19) European Patent Office

Office européen des brevets

(11) Numéro de publication: **0 106 711 B1**

# (12) FASCICULE DE BREVET EUROPEEN

(45) Date de publication du fascicule du brevet:
19.11.87

(51) Int. Cl.⁴: **G 05 G 1/04, B 62 M 25/04**

(21) Numéro de dépôt: **83401424.3**

(22) Date de dépôt: **08.07.83**

(54) **Manette d'actionnement pour dérailleur.**

(30) Priorité: **02.08.82 FR 8213466**

(43) Date de publication de la demande:
**25.04.84 Bulletin 84/17**

(45) Mention de la délivrance du brevet:
**19.11.87 Bulletin 87/47**

(84) Etats contractants désignés:
**BE DE GB IT LU NL**

(56) Documents cités:
**FR - A - 2 325 297**
**FR - A - 2 385 581**
**GB - A - 1 025 811**

(73) Titulaire: **SACHS-HURET S.A., 60, Avenue Félix Faure, F-92000 Nanterre (FR)**

(72) Inventeur: **Coue, Maurice, 6, Résidence du Vieux Puits, F-78810 Feucherolles (FR)**

(74) Mandataire: **Bressand, Georges et al, c/o CABINET LAVOIX 2 Place d'Estienne d'Orves, F-75441 Paris Cedex 09 (FR)**

**Description**

La présente invention concerne les manettes utilisées pour actionner, par exemple, un dérailleur de cycle, cet actionnement ayant lieu en général par l'intermédiaire d'un câble.

On sait, d'une façon générale, que les dérailleurs pour cycles sont rappelés vers une position par un ressort, de sorte que la résistance à l'effort d'actionnement est supérieure pour l'un des deux sens d'actionnement de la manette. En effet, dans un sens l'utilisateur doit vaincre la force exercée par le ressort de rappel, alors que dans l'autre sens, cette force de rappel tend à faciliter la manœuvre. Il est également connu de prévoir un dispositif à friction entre la manette et son support, de façon à maintenir cette manette et le dérailleur dans la position sélectionnée par l'utilisateur, malgré l'effort de rappel exercé par le ressort.

C'est ainsi que le document FR-A-2 325 297 décrit un dispositif de commande de dérailleur comprenant une manette montée rotative autour d'un tambour fixe autour duquel est enroulé serré un ressort hélicoïdal. Ce ressort est agencé de telle façon par rapport à la manette, qu'il se desserre et se désolidarise du tambour, quel que soit le sens d'actionnement de la manette. Dans un tel agencement, l'effort que l'utilisateur doit exercer sur la manette pour actionner le dérailleur, est différent pour les deux sens d'actionnement.

Le document FR-A-2 385 581 décrit quant à lui un agencement comprenant un support autour duquel est montée à friction une bague, une manette montée rotative sur cette bague, un ressort étant enroulé autour de la bague et ayant l'une de ses extrémités recourbée vers l'extérieur pour venir en prise dans un logement ménagé dans la manette. Ce logement présente un certain jeu par rapport à l'extrémité recourbée du ressort, ce qui permet à la manette de se replacer, si elle a été actionnée au-delà de sa position correcte.

Dans un tel agencement, le ressort exerce en tout état de cause une certaine pression sur la bague, même lorsque la manette est actionnée dans un sens qui tend à desserrer ce ressort, de sorte que l'effort résistant varie selon le sens d'actionnement.

Le but de cette invention est de fournir un agencement grâce auquel l'effort résistant tendant à s'opposer du déplacement de la manette soit à peu près constant, quelque soit le sens dans lequel cette manette est actionnée.

Une solution consisterait à interposer entre la manette proprement dite et le dispositif à friction un mécanisme à cliquet mais une telle solution présente deux inconvénients majeurs qui sont, d'une part, un coût relativement élevé car il faut adapter de façon assez importante la manette et les organes adjacents, et d'autre part, le fait qu'un tel mécanisme à cliquet est bruyant.

L'invention se propose donc de fournir au problème évoqué ci-dessus une solution à la fois simple, bon marché, qui ne modifie pas l'encombrement du dispositif d'actionnement et qui soit silencieuse.

A cet effet, elle a pour objet un dispositif d'actionnement pour dérailleur de cycle, du type comprenant une manette montée libre en rotation sur un support, et sur laquelle est accroché un câble d'actionnement rappelé par un ressort, une bague intermédiaire montée à friction par rapport au support et disposée entre le support et la manette, cette dernière délimitant un logement qui débouche en face de la surface externe de ladite bague et dans lequel est reçu un organe d'accouplement entre la manette et la bague, caractérisé en ce que l'organe d'accouplement est un rouleau et ledit logement délimite une rampe orientée de façon à réaliser un accouplement unidirectionnel par coincement de l'organe d'accouplement entre la manette et la bague lorsque la manette est actionnée dans le sens correspondant au relâchement du câble, la friction entre la bague intermédiaire et le support étant réglée de façon à exercer un effort résistant à peu près équivalent à l'effort exercé par le ressort de rappel du câble.

Suivant une autre caractéristique, l'organe d'accouplement est un simple rouleau.

L'invention va être décrite ci-dessous en se référant au dessin annexé donné à titre d'exemple et sur lequel:

– la Fig. 1 est une vue en coupe partielle d'un dispositif d'actionnement suivant l'invention;

– la Fig. 2 est une vue en coupe suivant la ligne 2–2 de la Fig. 1.

On voit sur le dessin une manette 1 d'actionnement de dérailleur pour cycle montée sur un élément 2 de cadre ou sur un guidon, par l'intermédiaire d'un collier 3. Sur ce collier est fixé, par exemple par soudure, un plot de support 4 délimitant une première portée cylindrique 5 sur laquelle est montée à peu près libre en rotation la manette 1, et une deuxième portée cylindrique 6 sur laquelle est reçue une bague ou une douille 7. Entre les deux portées 5 et 6 est délimité un épaulement radial 8 contre lequel est disposée une première rondelle d'appui 9. Une rondelle de friction 10 est interposée entre cette rondelle d'appui 9 et la face latérale de la bague 7. Une deuxième rondelle de friction 11 est interposée entre l'autre face latérale de la bague et une deuxième rondelle d'appui 12 comportant par exemple, deux méplats et calée en rotation par rapport au plot 4. Cet ensemble est complété par une plaque 13 portée par le support et contre laquelle la face latérale de la manette peut être guidée, avec interposition d'une rondelle anti-friction 14, et par une vis 15 de serrage et de fixation de l'ensemble.

La manette 1 délimite, comme cela est bien connu, un logement 16 dans lequel est reçue la tête d'un câble non représenté, ce câble étant par ailleurs guidé dans une gorge 17 ménagée à la périphérie de la manette.

Cette dernière délimite également un logement 18 qui débouche face à la surface externe de la douille 7 et dans lequel est reçu un galet ou rouleau cylindrique 19. Le logement 18 délimite à une extrémité une portée 18$^a$ de forme à peu près complémentaire à celle du rouleau, cette portée étant prolongée par une rampe 18$^b$ dont la distance par rapport à la surface externe de la douille diminue progressivement en s'éloignant de la portée 18$^a$.

Le logement 18 qui débouche également sur la face latérale de la manette peut être obturé par une plaquette 20.

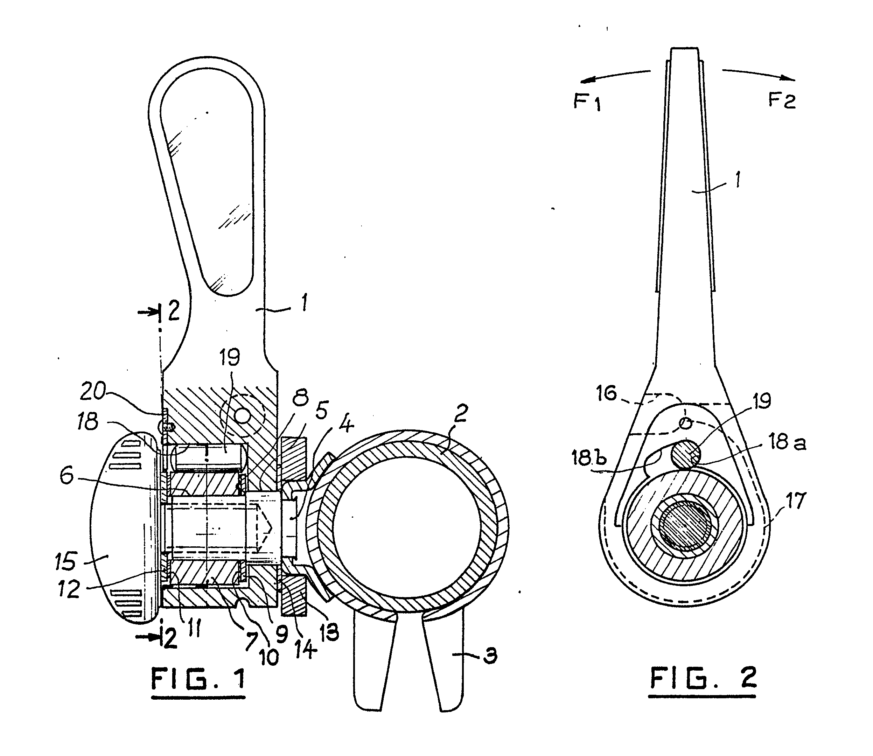

Le fonctionnement de ce dispositif est le suivant: lorsque la manette est actionnée dans le sens de la flèche F1 sur la Fig. 2, on exerce une traction sur le câble de commande. Le rouleau ou galet 19 occupe la position représentée sur la Fig. 2 et conserve cette position lors du déplacement de la manette. Dans cette position, le galet n'assure aucune liaison d'entraînement entre la manette et la bague, de sorte que le déplacement angulaire de la manette par rapport à son support est pratiquement libre. Par contre, le ressort du rappel du dérailleur agit et exerce un certain couple résistant en réponse à l'effort d'actionnement appliqué par l'utilisateur.

Si au contraire, la manette est actionnée dans le sens de la flèche F2 sur la Fig. 2, on tend à relâcher le câble de sorte que le ressort de rappel du dérailleur tend à faciliter le déplacement de la manette. Par contre, du fait de la présence de la rampe 18$^b$, le galet se coince entre la rampe et la bague 7 et réalise une solidarisation entre la manette et cette bague. Il en résulte un effort résistant, dû à la friction entre la bague et le support, et cet effort résistant est choisi de façon à être à peu près équivalent à celui exercé précédemment par le ressort de rappel du dérailleur.

On voit qu'on a donc résolu de façon très efficace le problème posé: en effet, les moyens mis en jeu pour obtenir ce résultat sont très simples puisqu'il est très facile de mouler la manette en ménageant le logement 18 et que le galet 19 constitue une pièce très bon marché. Aucun inconvénient supplémentaire ne résulte de cette adaptation. Par ailleurs, le fonctionnement de ce dispositif est parfaitement silencieux.

**Revendications**

1. Dispositif d'actionnement pour dérailleur de cycle, du type comprenant une manette (1) montée libre en rotation sur un support (4), et sur laquelle est accroché un câble d'actionnement rappelé par un ressort, une bague intermédiaire (7) montée à friction par rapport au support et disposée entre le support et la manette, cette dernière délimitant un logement (18) qui débouche en face de la surface externe de ladite bague (7) et dans lequel est reçu un organe (19) d'accouplement entre la manette et la bague, caractérisé en ce que l'organe d'accouplement (19) est un rouleau et ledit logement (18) délimite une rampe (18b) orientée de façon à réaliser un accouplement unidirectionnel par coincement de l'organe d'accouplement entre la manette et la bague lorsque la manette est actionnée dans le sens correspondant au relâchement du câble, la friction entre la bague intermédiaire (7) et le support (4) étant réglée de façon à exercer un effort résistant à peu près équivalent à l'effort exercé par le ressort de rappel du câble.

2. Dispositif suivant la revendication 1, caractérisé en ce que le logement (18) délimite à une extrémité une portée (18a) de forme complémentaire de celle de l'organe d'accouplement, à partir de laquelle s'étend la rampe (18b).

3. Dispositif suivant l'une des revendications 1 et 2, caractérisé en ce que le support (4) délimite une première portée cylindrique (5) sur laquelle est montée libre en rotation la manette (1), et une deuxième portée cylindrique (6) sur laquelle est reçue la bague intermédiaire (7), un épaulement radial (8) étant délimité entre les deux portées (5, 6), contre lequel est disposée une rondelle d'appui (9) pour la bague intermédiaire (7).

**Claims**

1. An actuating device for a cycle derailleur, of the type comprising a lever (1) freely rotatively mounted on a support (4), and on which is hooked an actuating cable returned by a spring, an intermediate ring (7) frictionally mounted relative to the support and disposed between the support and the lever, the latter defining a cavity (18) which opens onto the outer surface of said ring (7) and in which is received a coupling element (19) for achieving a coupling between the lever and the ring, characterised in that the coupling element (19) is a roller and said cavity (18) defines a ramp (18b) oriented in such manner as to achieve a unidirectional coupling by a wedging of the coupling element between the lever and the ring when the lever is actuated in the direction corresponding to the slackening of the cable, the friction between the intermediate ring (7) and the support (4) being so regulated as to exert a resisting force which is roughly equivalent to the force exerted by the return spring of the cable.

2. A device according to claim 1, characterised in that the cavity (18) defines at one end a bearing surface (18a) whose shape is complementary to that of the coupling element and from which the ramp (18b) extends.

3. A device according to one of the claims 1 and 2, characterised in that the support (4) defines a first cylindrical bearing surface (5) on which the lever (1) is freely rotatively mounted, and a second cylindrical bearing surface (6) on which the intermediate ring (7) is received, a radial shoulder (8) being defined between the two bearing surfaces (5, 6) against which is disposed a thrust washer (9) for the intermediate ring (7).

**Patentansprüche**

1. Betätigungseinrichtung für eine Fahrradgangschaltung, mit einem Handgriff (1), welcher frei drehbar auf einer Lagereinrichtung (4) angeordnet ist und an welchem ein durch eine Rückholfeder belasteter Kabelzug angeschlossen ist, und mit einem mit Reibung gegenüber der Lagereinrichtung montierten, zwischen der Lagereinrichtung und dem Handgriff angeordneten Zwischenring (7), wobei der Handgriff eine Ausnehmung (18) aufweist, die zur Aussenfläche des Zwischenringes (7) hin offen ist und in welcher zwischen dem Handgriff und dem Zwischenring ein Kupplungsorgan (19) aufgenommen ist, dadurch gekennzeichnet, dass das Kupplungsorgan (19) als Rolle ausgebildet ist und die Ausnehmung (18) eine Rampe (18b) bildet, die so ausgerichtet ist, dass sie eine Einwegkupplung durch Einklemmen des Kupplungsorgans zwischen Handgriff und Zwischenring bildet, wenn der Handgriff in einer Richtung verstellt wird, die einer Entlastung des Kagelzuges entspricht, wobei die Reibung zwischen Zwischenring (7) und Lagereinrichtung (4) so eingestellt wird, dass ein Reibungswiderstand erzeugt wird, der annähernd gleich der von der Rückholfeder des Kabelzuges erzeugten Kraft ist.

2. Betätigungseinrichtung nach Anspruch 1, dadurch gekennzeichnet, dass die Ausnehmung (18) an einem Ende einen Anschlagsitz (18a) mit einer der Form des Kupplungselementes komplementären Form bildet, an welchen sich die Rampe (18b) anschliesst.

3. Einrichtung nach einem der Ansprüche 1 und 2, dadurch gekennzeichnet, dass die Lagereinrichtung (4) einen ersten zylindrischen Lagerzapfen (5) aufweist, auf welchem der Handgriff (1) frei drehbar montiert ist, sowie einen zweiten zylindrischen Lagerzapfen (6), auf welchem der Zwischenring (7) sitzt, wobei zwischen diesen beiden Lagerzapfen (5, 6) eine radiale Schulter (8) ausgebildet ist, gegen die eine Stützscheibe (9) für den Zwischenring (7) anliegt.

FIG. 2

FIG. 1